# EUROPÄISCHE PATENTSCHRIFT

(11) **EP 0 699 885 B1**
(45) Veröffentlichungstag und Bekanntmachung des Hinweises auf die Patenterteilung: **19.12.2001**
(21) Anmeldenummer: 95810515.7
(22) Anmeldetag: 16.08.1995
(51) Int. Cl.: F27B 3/24

(54) **Ofengefäss für einen Gleichstromlichtbogenofen**
Furnace vessel for a direct current arc furnace
Cuve de four à arc à courant continu

(30) Priorität: 02.09.1994 DE 4431293
(43) Veröffentlichungstag der Anmeldung: 06.03.1996
(73) Patentinhaber: CONCAST STANDARD AG, 8027 Zürich (CH)
(72) Erfinder: Lassander, Erik Alfred, S-26040 Viken (SE); Stenkvist, Sven-Einar, CH-5200 Brugg (CH)

(56) Entgegenhaltungen:
- EP-A- 0 578 596
- DE-A- 2 759 713
- DE-A- 2 928 964
- FR-A- 2 169 649
- GB-A- 1 063 018
- US-A- 2 166 964
- US-A- 3 940 552
- US-A- 4 434 495

## Beschreibung

### TECHNISCHES GEBIET

Die Erfindung bezieht sich auf ein Ofengefäss für einen Gleichstrom-Lichtbogenofen mit einer wärmebeständigen Wandung, die im oberhalb der Schmelzzone liegenden Bereich teilweise mit einer Kühleinrichtung versehen ist.

### TECHNOLOGISCHER HINTERGRUND UND STAND DER TECHNIK

Metallschmelzöfen sind normalerweise als Stahlkonstruktion ausgeführt. Zum Schutz gegen die hohen Temperaturen im Gefäss und auch am Deckel sind Auskleidungen aus Feuerfestmaterial vorgesehen. Diese schützt die Stahlkonstruktion gegen thermische, chemische und mechanische Beanspruchungen. Die hohen Belastungen führen dazu, dass die feuerfeste Auskleidung nur eine begrenzte Standzeit hat. Entsprechend dieser Standzeit muss die Produktion regelmässig unterbrochen werden, um eine neue Ausmauerung einzubringen. Diese Neuzustellungen führen zu einer Verminderung der Produktion und stellen ferner einen wesentlichen Bestandteil der Betriebskosten dar.

Um die beanspruchten Teile vor Hitzeinwirkungen zu schützen, werden Kühleinrichtungen, insbesondere Kühlrohre, verwendet, die in oder an das Mauerwerk ein- oder angebaut werden. Dabei lässt es sich aber nicht vermeiden, dass Teile der feuerfesten Ausmauerung infolge der hohen Beanspruchungen nach mehreren Chargen abplatzen bzw. abbröckeln. Aus diesem Grunde ist man vor einigen Jahren dazu übergegangen, wassergekühlte Wand- und Deckelzustellungen zu entwickeln, die ausserhalb des Schmelzbereiches die Feuerfestauskleidung ersetzen können.

Aus der DE-27 45 622 C2 ist ein derartiges Gefäss für einen Metallschmelzofen bekannt. Der oberhalb der der Schmelzzone liegende Bereich der Gefässwand besteht aus Kühlblöcken aus mindestens einer im wesentlichen beidseitig freiliegenden Kühlrohrschlange, die an einer als Blechmantel oder Skelett ausgebildeten Tragwand befestigt sind. Nachteilig dabei ist, dass durch das in den Rohrschlangen zirkulierende Kühlwasser ein beträchtlicher Teil der Verlustleistung des Ofens abgeführt wird. So können bei einem 150-Tonnen-Ofen die Verluste durch die wassergekühlte Wand viele Megawatt betragen.

### KURZE DARSTELLUNG DER ERFINDUNG

Der Erfindung liegt die Aufgabe zugrunde, ein Gefäss für einen Gleichstrom-Lichtbogenofen zu schaffen, dass allen Betriebsbeanspruchungen standhält und sich jedoch durch vergleichsweise geringe Wärmeverluste auszeichnet.

Diese Aufgabe wird erfindungsgemäss dadurch gelöst, dass am oberen Gefässrand eine erste Kühleinrichtung vorgesehen ist, und dass auf der Höhe der Schlackenlinie eine zweite Kühleinrichtung vorgesehen ist, und dass der dazwischenliegende dem Gefässinneren zugewandte Bereich der Gefässwand oberhalb der Schlackenlinie im wesentlichen aus Feuerfestmaterial besteht.

Der Erfindung liegen dabei die folgenden Erkenntnisse zugrunde:

Lichtbögen eines Wechselstromofen werden durch das in Elektrodenbereich wirkende Magnetfeld schräg nach aussen abgelenkt. Dadurch schmilzt das Einsatzgut, meist Schrott, zwischen Elektrode und Gefässwand frühzeitig weg, wodurch die Wand der vollen Leistung der Lichtbögen ausgesetzt ist. Bei Wechselstromöfen sind demnach Kühlmassnahmen, z.B. nach der eingangs zitierten DE-27 45 622 C2, unumgänglich. Der Gleichstromlichtbogenofen hingegen bietet die Möglichkeit eines zentral angeordneten, senkrecht brennenden Lichtbogens. Dadurch wird die spezifische Wärmebeanspruchung erheblich kleiner. Es genügt dann, nur die besonders beanspruchten Zonen im Bereich oberhalb der Schmelze gezielt zu kühlen, nämlich die Gefässoberkante und den Bereich der Schlackenlinie. Unter dem gekühlten Gefässrand ist die Gefässwand bis zur Schlackenlinie keramisch zugestellt, mit einer typischen Dicke von 300 mm. Diese Zustellung kann beispielsweise aus Steinen, z.B. Magnesit- oder Magnesitgraphit-Steinen, oder aus Stampf- und Spritzmassen aus Feuerfestmaterial eingerichtet werden. Unter diesem keramischen Wändteil folgt am Schlackenrand auf der Höhe der Schlackenlinie wieder ein verstärkt wassergekühlter Bereich.

Der Vorteil der Erfindung ist insbesondere darin zu sehen, dass auf diese Weise die Wandverluste auf etwa 5 bis 10 kW/m² Wandfläche reduziert werden können, was insgesamt gesehen zu einer Verringerung der Verlustleistung um etwa 50% führt.

Ein Ausführungsbeispiel der Erfindung sowie die damit erzielbaren Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch dargestellt.

Es zeigt
- Fig.1: einen Teil des vereinfachten Längsschnitt durch das Ofengefäss eines Gleichstromlichtbogenofen mit nur abschnittsweise flüssigkeitsgekühlter Gefässwand;
- Fig.2: einen Ausschnitt aus Fig.1 mit einer zweiten Kühleinrichtung mit Kühlrohren, die an der Innenseite eines U-förmigen Trägers angeordnet sind;
- Fig.3: eine alternative Ausführungs der zweiten Kühleinrichtung mit dicht an dicht angeordneten Kühlrohren.

### WEGE ZUR AUSFÜHRUNG DER ERFINDUNG

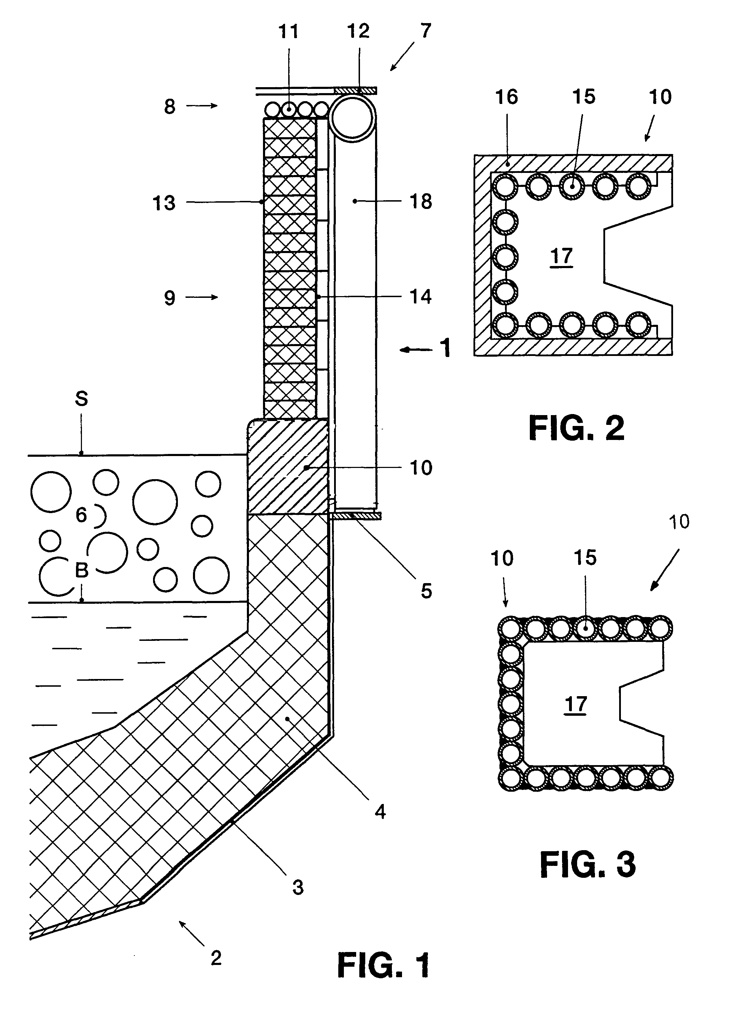

Gemäss Fig.1, die einen teilweisen Schnitt durch das Ofengefäss eines Gleichstromlichtbogenofens zeigt, besteht das Ofengefäss aus einem Gefässoberteil 1 und einen Bodenteil 2. Der Bodenteil 2 ist in üblicher Weise aufgebaut. Auf einem Mantel 3 aus Stahlblech liegt die Bodenausmauerung 4 auf. Der Mantel endet in einem Kragen 5. Der sich im Betrieb einstellende Badspiegel ist mit B bezeichnet. Er liegt deutlich unterhalb des Kragens 5. Die beim Ofenbetrieb entstehende Schlackenschicht 6 reicht bis zur Schlackenlinie S.

Der Gefässoberteil 1 liegt sowohl auf der Bodenausmauerung 4 als auch auf dem Kragen 5 auf. Es umfasst vom Gefässrand 7 von oben nach unten gesehen im wesentlichen drei Abschnitte. Unmittelbar an den Gefässrand 7 angrenzend eine erste Kühleinrichtung 8, einen keramischen Wandteil 9 und eine zweite Kühleinrichtung 10 auf der Höhe der Schlackenlinie S.

Die erste Kühleinrichtung 8 besteht aus einem wassergekühlten Ring oder Ringsegmenten, gebildet aus nebeneinander angeordneten Kühlrohren 11, die von einem Tragring 12 abgedeckt sind.

Der keramische Wandteil 9 besteht im Beispielsfall aus Magnesit- oder Magnesitgraphit-Steinen 13 mit einer Dicke von typisch 300 mm. Sie kann aber auch aus Spritz- oder Stampfmasse aus Feuerfestmaterial bestehen. An der Aussenseite ist eine Tragwand 14 vorgesehen, die aus Stahlblech mit aufgeschweissten Verstärkungsrippen besteht. Optional kann diese Tragwand 14 doppelwandig ausgeführt sein und kann von Kühlwasser durchströmt werden.

Unter diesem keramischen Wandteil 9 folgt am Schlackenrand wieder ein verstärkter wassergekühlter Bereich mit der zweiten Kühleinrichtung 10. Diese besteht gemäss Fig.2 im wesentlichen aus Kühlrohren 15, die an die Innenseite eines Trägers 16 mit U-Profil (bei Stahlrohren) angeschweisst oder (bei Kupferrohren) angelötet sind. Stützbleche 17 erhöhen die mechanische Stabilität des Trägers 16.

Alternativ können gemäss Fig.3 die Kühlrohre 15 auch ohne Verwendung eines Trägers dicht an dicht angeordnet und untereinander dicht verschweisst oder verlötet sein. Auch hier dienen Stützbleche 17 zur Verstärkung.

Neben der Kühlfunktion bildet die zweite Kühleinrichtung 10 gleichzeitig auch die tragende Struktur für den keramischen Wandteil 9 und (natürlich) auch den (nicht eingezeichneten) Deckel des Ofengefässes.

Das Gefässoberteil 1 ist vorzugsweise in Sektionen oder Segmente aufteilt, um den Austausch defekt gewordener Wandteile zu vereinfachen. Die einzelnen Sektionen oder Segmente werden durch eine an sich bekannte Käfigkonstruktion, von welche in Fig.1 nur ein vertikal verlaufendes Käfigelement 18 sichtbar ist, gestützt.

### BEZEICHNUNGSLISTE

- 1: Gefässoberteil
- 2: Bodenteil
- 3: Stahlmantel
- 4: Bodenausmauerung
- 5: Kragen an 3
- 6: Schlacke
- 7: Gefässrand
- 8: erste Kühleinrichtung
- 9: keramischer Wandteil
- 10: zweite Kühleinrichtung
- 11,15: Kühlrohre
- 12: Tragring
- 13: Magnesitsteine
- 14: Tragwand
- 16: U-förmiger Träger für 15
- 17: Stützbleche
- 18: Kafigelement

- B: Badspiegel
- S: Schlackenlinie

## Patentansprüche

1. Gefäss für einen Gleichstrom-Lichtbogenofen mit einer wärmebeständigen Wandung, die im oberhalb der Schmelzzone liegenden Bereich teilweise mit einer Kühleinrichtung versehen ist, **dadurch gekennzeichnet, dass** am oberen Gefässrand (7) eine erste Kühleinrichtung (8) vorgesehen ist, und dass auf der Höhe der Schlackenlinie (S) eine zweite Kühleinrichtung (10) vorgesehen ist, und dass der dazwischenliegende dem Gefässinneren zugewandte Bereich der Gefässwand (9) oberhalb der Schlackenlinie (S) im wesentlichen aus Feuerfestmaterial (13) besteht

2. Gefäss nach Anspruch 1, **dadurch gekennzeichnet, dass** die erste Kühleinrichtung (8) als geschlossener oder in Segmente unterteilter Ring aus Kühlrohren (11) ausgebildet ist.

3. Gefäss nach Anspruch 1 oder 2, **dadurch gekennzeichnet, dass** die zweite Kühleinrichtung als geschlossener oder in Segmente unterteilter Ring ausgebildet ist und Kühlrohre (15) umfasst, die an einem Träger (16) angeordnet sind oder aus dicht an dicht angeordneten Kühlrohren (15) besteht, die unter sich dicht miteinander verbunden sind.

4. Gefäss nach einem der Ansprüche 1 bis 3, **dadurch gekennzeichnet, dass** die zweite Kühleinrichtung eine tragende Struktur für das Feuerfestmaterial (9) bildet.

5. Gefäss nach Anspruch 1, **dadurch gekennzeichnet, dass** das Feuerfestmaterial aus Ziegeln (13), einer Stampf- oder Spritzmasse besteht, die sich an einer Tragwand (14) abstützen.

6. Gefäss nach Anspruch 5, **dadurch gekennzeichnet, dass** die Tragwand (14) doppelwandig ausgeführt ist.

## Claims

1. A vessel for a direct current arc furnace having a heat-resistant wall provided partially with a cooling device in the region situated above the melting zone, **characterised in that** a first cooling device (8) is provided on the top edge (7) of the vessel, a second cooling device (10) is provided at the height of the slag line (S), and the region of the vessel wall (9) situated therebetween and facing the interior of the vessel above the slag line (S) consists essentially of refractory material (13).

2. The vessel as claimed in claim 1, **characterised in that** the first cooling device (8) is in the form of a closed ring, or a ring divided into segments, of cooling tubes (11).

3. The vessel as claimed in claim 1 or 2, **characterised in that** the second cooling device is in the form of a closed ring or a ring divided into segments and comprises cooling tubes (15) which are arranged on a girder (16), or it comprises cooling tubes (15) which are arranged close against one another and are tightly joined to each other.

4. The vessel as claimed in claims 1 to 3, **characterised in that** the second cooling device forms a supporting structure for the refractory material (9).

5. The vessel as claimed in claim 1, **characterised in that** the refractory material consists of bricks (13) or of rammed or sprayed monolithic material, which are or is supported on a supporting wall (14).

6. The vessel as claimed in claim 5, **characterised in that** the supporting wall (14) is a double wall.

## Revendications

1. Carcasse pour un four à arc à courant continu comportant une paroi thermorésistante, qui est équipée partiellement, dans la zone située au-dessus de la zone de fusion, d'un dispositif de refroidissement, **caractérisée en ce qu'**un premier dispositif de refroidissement (8) est prévu sur le bord supérieur (7) de la carcasse, et qu'un second dispositif de refroidissement (10) est prévu au niveau de la ligne (S) des scories, et que la zone intercalaire de la paroi (9) de la carcasse, qui est tournée vers l'intérieur de la carcasse, au-dessus de la ligne (S) des scories, est constituée essentiellement par un matériau réfractaire (13).

2. Carcasse selon la revendication 1, **caractérisée en ce que** le premier dispositif de refroidissement (8) est agencé sous la forme d'un anneau fermé divisé en segments, de tubes de refroidissement (11).

3. Carcasse selon la revendication 1 ou 2, **caractérisée en ce que** le second dispositif de refroidissement est agencé sous la forme d'un anneau fermé ou divisé en segments et comprend des tubes de refroidissement (15), qui sont disposés sur un support (16), ou est constitué par des tubes de refroidissement (15) qui sont disposés selon une disposition très serrée et sont reliés entre eux en étant serrés d'une manière étanche.

4. Carcasse selon l'une des revendications 1 à 3, **caractérisée en ce que** le second dispositif de refroidissement forme une structure porteuse pour le matériau réfractaire (9).

5. Carcasse selon la revendication 1, **caractérisée en ce que** le matériau réfractaire est constitué de briques (13), d'une masse réfractaire compactée ou d'une masse moulée par injection, qui prennent appui contre une paroi de support (14).

6. Carcasse selon la revendication 5, **caractérisé en ce que** la paroi de support (14) est réalisée sous la forme d'une paroi double.
